# EUROPÄISCHE PATENTSCHRIFT

(11) **EP 0 727 863 B1**
(45) Veröffentlichungstag und Bekanntmachung des Hinweises auf die Patenterteilung: **14.05.2003**
(21) Anmeldenummer: 96810058.6
(22) Anmeldetag: 29.01.1996
(51) Int. Cl.: H02K 3/30, H02K 3/34, H02K 15/12

(54) **Verfahren und Vorrichtung zur Herstellung von Leiterstäben für dynamoelektrische Maschinen**
Electric machine conducting rod manufacturing method and device
Méthode et dispositif de fabrication de barreaux conducteurs pour machines électriques

(30) Priorität: 15.02.1995 DE 19505020
(43) Veröffentlichungstag der Anmeldung: 21.08.1996
(73) Patentinhaber: ALSTOM (Switzerland) Ltd, 5401 Baden (CH)
(72) Erfinder: Meier, Walter, CH-5622 Waltenschwil (CH); Müller, Günter, A-8160 Weiz (AT)

(56) Entgegenhaltungen:
- EP-A- 0 059 402
- PATENT ABSTRACTS OF JAPAN vol. 005, no. 167 (E-079), 24.Oktober 1981 & JP 56 094949 A (FUJI ELECTRIC CO LTD), 31.Juli 1981,
- PATENT ABSTRACTS OF JAPAN vol. 010, no. 248 (E-431), 26.August 1986 & JP 61 076048 A (MEIDENSHA ELECTRIC MFG CO LTD), 18.April 1986,
- PATENT ABSTRACTS OF JAPAN vol. 010, no. 376 (E-464), 13.Dezember 1986 & JP 61 167351 A (TOSHIBA CORP), 29.Juli 1986,
- N.DIDZUN ET AL: "micalastic insulation for stator windings of turbogenerators" SIEMENS POWER ENGINEERING, Bd. 4, Nr. 1, Januar 1982, PASSAU,DE, Seiten 20-23, XP002056460

## Beschreibung

### TECHNISCHES GEBIET

Die Erfindung bezieht sich auf ein Verfahren zur Herstellung von Leiterstäben für dynamoelektrische Maschinen, bei dem die Leiterstäbe mit einer trocken aufgebrachten Hauptisolierung unter Zwischenschaltung einer Trennfolie in einer Pressvorrichtung angeordnet sind, in dieser auf Mass gepresst und mitsamt der Pressvorrichtung in einem Imprägniergefäss mit Tränkharz imprägniert und ausgehärtet werden.

Die Erfindung bezieht sich ferner auf eine Vorrichtung zur Durchführung des Verfahrens.

Die Erfindung nimmt dabei Bezug auf einen Stand der Technik, wie er beispielsweise in dem Buch von Sequenz "Herstellung der Wicklungen elektrischer Maschinen", Springer-Verlag Wien · New York, 1973, insbesondere Seite 153, beschrieben ist.

### TECHNOLOGISCHER HINTERGRUND UND STAND DER TECHNIK

Die Wicklungsisolierung von Stabwicklungen erfolgt meist mittels Vakuumtränkung mit härtbaren, lösungsmittelfreien Tränkharzen. Diese Technik ermöglicht die Verwendung von Glimmerbändern, die zunächst in nahezu trockener Form mit geringem Bindemittelanteil auf die Stäbe aufgewickelt werden können. Erst die Imprägnierung und das Imprägnierharz bestimmen die endgültige Qualtität der Isolierung. Sie tragen ausserdem zur zusätzlichen Verfestigung der Leiter und Teilleiter bei, weil alle restlichen Hohlräume mit Tränkharz ausgefüllt werden.

Bei dieser Technik haben sich zwei verschiedene Tränk- und Formverfahren herausgebildet.

Beim ersten (älteren) Verfahren werden die trocken isolierten Leiterstäbe nach einer Vortrockmung im Ofen in eine Vakuumanlage gebracht und für die Imprägnierung entgast. Nach Erreichen des gewünschten Vakuums wird das in einem Imprägnierbehälter befindliche Tränkgut mit dem gegebenenfalls vorgewärmten und entgasten Tränkharz überflutet. Daran schliesst sich eine ausreichend lange Druckperiode an, die das Eindringen des Harzes in die Glimmerbandbewicklung fördert.

Nach der Entnahme der Stäbe aus der Tränkwanne werden auf der nunmehr imprägnierten und deshalb mechanisch empfindlichen Bewicklung Trennfolien angebracht, die das Verkleben mit der Form bei der Härtung verhindern sollen. Da bei der Formgebung überschüssiges Tränkharz wieder aus der Bandbewicklung herausgedrückt werden muss, sind hohe Pressdrücke erforderlich, um die Formen zu schliessen und die Leiterisolierung auf das vorgesehene Mass zu bringen. Die getränkte Isolierung der Stäbe wird in heizbaren Formen oder Pressen unmittelbar oder mit diesen in einem Ofen bei Temperaturen zwischen 120 und 150 °C über mehrere Stunden ausgehärtet.

Den Umbau der Stäbe mit imprägnierter Bewicklung von der Tränkwanne in die formgebenden Pressen vermeidet ein neueres Verfahren, wie in der JP-A-61076048 offenbart, bei dem die Stäbe mit der trockenen Isolierung in eine Form eingelegt werden, in welcher sie während der Tränkung und Härtung verbleiben. Da zur Formgebung der trockenen Glimmerbandbewicklung eine weniger grosse Kraft erforderlich ist, können derartige Formen weniger schwer ausgeführt sein. Sie erlauben ausserdem die gleichzeitige Imprägnierung einer grösseren Anzahl von Stäben, wenn man sie in geeigneter Weise unter Ausnutzung des vorhandenen Volumens eng zusammenschichtet. Die erforderlichen Trennmittel und Trennfolien sind schon vor dem Einbau aufgebracht, und die Reinigung der Form ist durch ihre leichte Demontierbarkeit und Verwendung von baukastenähnlich aufsetzbaren Zwischenteilen und Leisten sehr erleichtert (vgl. a.a.O. Abb.92 auf Seite 153).

Die nach dem erstgenannten Verfahren hergestellten Leiterstäbe weisen eine hohe Formgenauigkeit auf, sind aber aufwendig herzustellen. Insbesondere ist die Umweltbelastung sehr hoch. Das zweite Verfahren ist wesentlich wirtschaftlicher, doch erfordert das gemeinsame Pressen und Aushärten einer derart grossen Anzahl von Stäben aufwendige Vorarbeiten, um unter anderem sicherzustellen, dass die geforderte Stabgeometrie eingehalten werden kann.

### KURZE DARSTELLUNG DER ERFINDUNG

Der Erfindung liegt die Aufgabe zugrunde, ein Verfahren und eine zugehörige Einrichtung zur Herstellung von Leiterstäben für dynamoelektrische Maschinen zu schaffen, das bei vergleichsweise geringem Aufwand engtolerierte Leiterstäbe ergibt, und sich durch geringe Belastung der Umwelt, insbesondere des Bedienungspersonals, auszeichnet.

Diese Aufgabe wird durch das Verfahren nach Anspruch 1 bzw. die Einrichtung nach Anspruch 2 gelöst.

Prinzipiell könnte auch der Evolvententeil (Stirnbügel) der Leiterstäbe auf diese Weise "gepanzert" werden. Aus Gründen einfacher Fertigung sind dort jedoch die Pressleisten aus Flachmaterial, weil im Bereich des Wickelkopfes die Massgenauigkeit eine eher untergeordnete Rolle spielt.

Die Pressvorrichtung gestaltet sich besonders einfach, weil sie aus einfach herzustellenden Teilen aufgebaut ist, die zudem einfach zu reinigen sind.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In den Zeichnungen 3-6 sind Ausführungsbeispiele der Erfindung schematisch dargestellt, und zwar zeigt:
- Fig.1: einen Querschnitt durch einen Leiterstab mit einer ihn umgebenden Pressvorrichtung, die aus vier flachen Pressleisten besteht, welche an den Stosskanten punktuell verschweisst sind;
- Fig.2: einen Querschnitt durch einen Leiterstab mit einer ihn umgebenden Pressvorrichtung, die aus zwei L-förmigen Pressleisten besteht, welche an den Stosskanten punktuell verschweisst sind;
- Fig.3: einen Querschnitt durch einen Leiterstab mit einer ihn umgebenden Pressvorrichtung, die aus vier flachen Pressleisten besteht, welche untereinander mittels abgewinkelten Laschen punktuell verbunden sind;
- Fig.4: einen Querschnitt durch einen Leiterstab mit einer ihn umgebenden Pressvorrichtung, die aus zwei L-förmigen Pressleisten besteht, welche untereinander mittels abgewinkelten Laschen verbunden sind;
- Fig.5: eine Seitenansicht des Nutteils eines mit der Pressvorrichtung gemäss Fig.3 versehenen Leiterstabes.
- Fig.6: eine Seitenansicht des Nutteils eines mit der Pressvorrichtung gemäss Fig.4 versehenen Leiterstabes.

### WEGE ZUR AUSFÜHRUNG DER ERFINDUNG

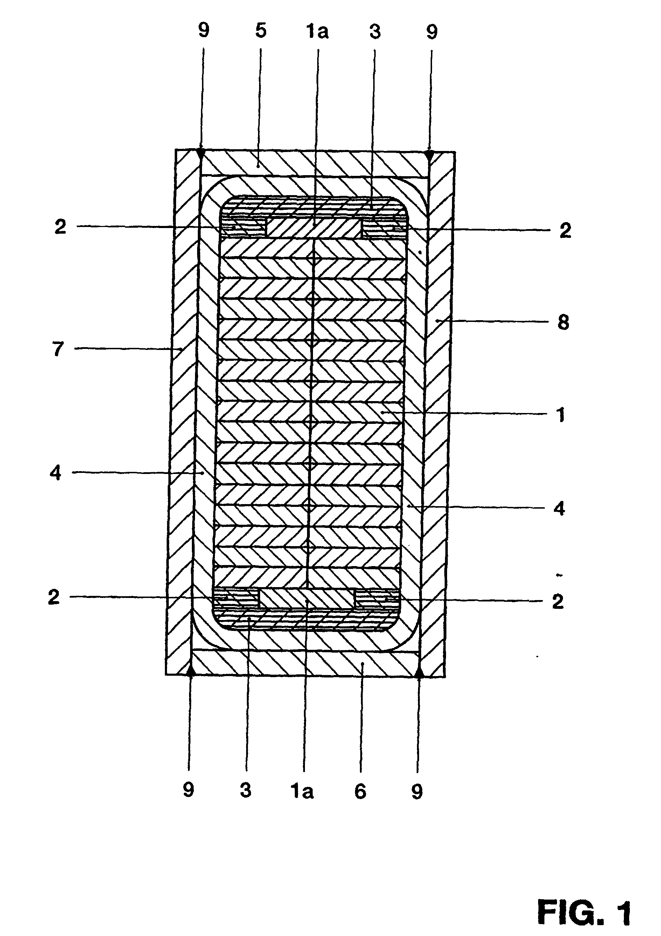

In dem in den Figuren 1 bis 4 dargestellten Querschnitt durch einen aus isolierten Kupferflachleitern 1 aufgebauten Leiterstab sind die Teilleiter nach dem Roebelprinzip miteinander verseilt. Bei dieser nunmehr seit vielen Jahrzehnten angewandten Technik zur Vermeidung von Schlingströmen wechselt jeder Teilleiter seine radiale Höhe über die Stablänge. Dies wiederum hat zur Folge, dass an den sogenannten Kröpfungsstellen auf den Schmalseiten des Leiterstabes Hohlräume auftreten, die im Beispielsfall mit einem halbleitenden pastösen Kitt 2 ausgefüllt sind. Alternativ kann auch ein Kittstreifen mit Leiterbündelbreite auf die Schmalseiten des Stabes aufgelegt werden, der sich beim späteren Pressen den vorhandenen Formen anpasst. Ein Deckstreifen 3 aus kohlefaserverstärktem Kunstoff (CFK) deckt diese Kittausfüllung und den äussersten Teilleiter la ab. Dieser Deckstreifen 3 ist an seinen nach aussen weisenden Kanten abgerundet (in den Figuren 1 bis 4 übertrieben dargestellt), mit einem Verrundungsradius von typisch 1,5 bis 2 mm. Auf diese Weise wird die Feldstärke in diesem Bereich verringert. Darüber hinaus wird dort die das Leiterbündel umgebende Hauptisolation 4 beim Aufbringen derselben weniger beschädigt, so dass diese a priori dünner ausgeführt werden kann.

Der auf diese Weise aufgebaute Leiterstab wird nun mit trocken aufgebrachter Hauptisolation 4 und unter Zwischenschaltung an sich bekannter Trennfolien (nicht eingezeichnet) in eine Pressvorrichtung eingelgt bzw. von ihr umgeben. Bei einer ersten Ausführungform umfasst diese Pressvorrichtung vier Pressleisten 5 bis 8, welche den Leiterstab in Umfangsrichtung und in seiner gesamten Länge vollständig umgeben. Die den Stabschmalseiten zugeordneten Pressleisten 5, 6 sind bezüglich ihrer Breite so bemessen, dass diese der gewünschten Leiterstabbreite entsprechen. Die Breite der den Breitseiten des Leiterstabes zugeordneten Pressleisten 7, 8 entsprechen der gewünschten Leiterstabhöhe zuzüglich der doppelten Dicke der Pressleisten 5, 6. Diese Ausgestaltung der Pressvorrichtung erlaubt das Pressen des (trocken isolierten) Leiterstabes auf Sollmass, weil die beiden schmalen Pressleisten 5, 6 den Abstand zwischen den breiten Pressleisten 7, 8 und damit die Leiterstabbreite bestimmen. Das Pressen auf Mass in Leiterstabhöhe lässt sich ebenfalls in einfacher Weise kontrollieren: Wenn beide Pressleisten 5, 6 bündig mit den Kanten der Pressleisten 7, 8 sind, ist auch die Leiterstabhöhe auf Sollmass.

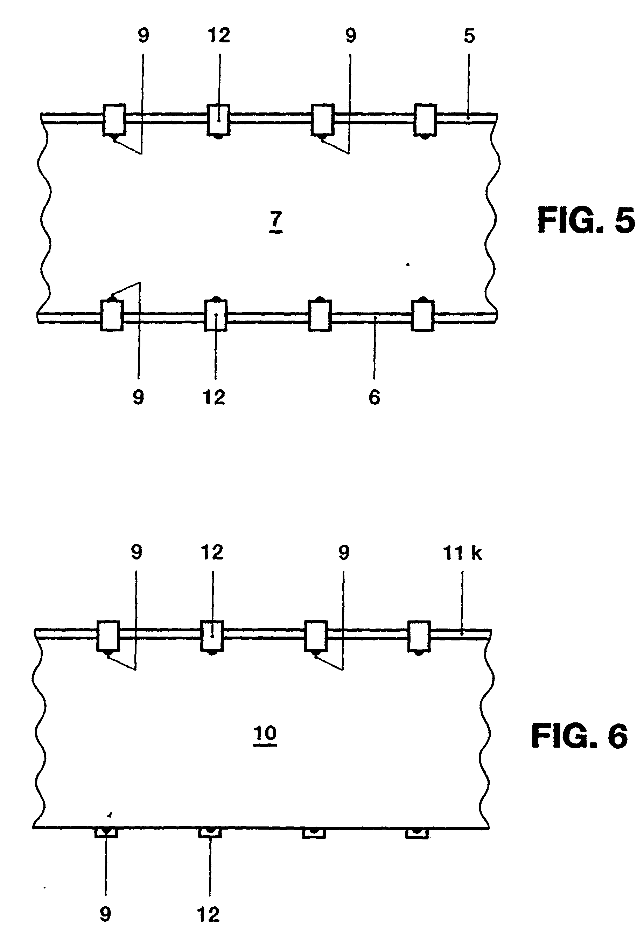

Das Pressen selbst kann mit beliebigen Hilfseinrichtungen erfolgen. Diese können grundsätzlich über die gesamte Stablänge wirken. Vorzugsweise erfolgt jedoch das Pressen mittels schraubzwingenartiger Spannmittel, die gleichmässig und in vergleichsweise geringem Abstand über die Stablänge verteilt angesetzt werden. Wie aus den Figuren 5 und 6 hervorgeht, ist für das Ansetzen der Spannmittel zwischen benachbarten Verbindungstellen genügend Platz vorhanden. Die Spannmittel können dabei von Hand, pneumatisch oder hydraulisch betätigt werden. Nach dem Pressen auf Sollmass werden nun die Pressleisten 5 bis 8 an ihren Stosstellen punktuell verschweisst. In der Zeichnung sind diese Schweisstellen mit 9 bezeichnet. Die Schweisstellen kommen dabei vorzugsweise jeweils zwischen zwei benachbarten Spannstellen zu liegen.

Weil der Stirnbügelabschnitt eines Leiterstabes eine vergleichweise komplexe Form, meist Evolventenform, aufweist, ist es zweckmässig, die Pressleisten in Stablängsrichtung zu unterteilen, wobei für den Nutteil des Leiterstabes eine durchgehende Pressleiste, für den Bügelteil eine oder mehrere Pressleisten vorgesehen sein können.

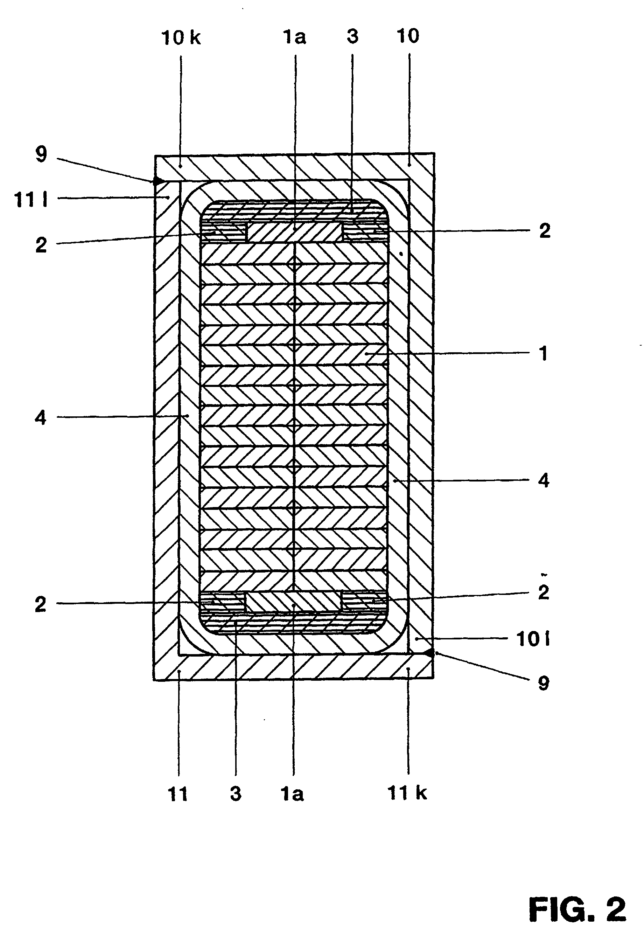

Diese Vorgehensweise wird dann fast zwingend, wenn - wie in Fig.2 dargestellt - Pressleisten 10, 11 mit L-förmigem Querschnitt verwendet werden. Dabei stossen jeweils die Stirnflächen der kurzen Schenkelenden 10k, 11k stumpf an die langen Schenkelenden 101 bzw. 111, wo sie analog Fig.1 punktuell verschweisst sind. Auch bei dieser Ausführungsform ergibt sich eine hohe Massgenauigkeit beim Pressen, weil auch hier Höhe und Breite des Leiterstabes durch die Geometrie der Pressleisten bestimmt ist und während des Pressvorgangs einfach zu kontrollieren ist.

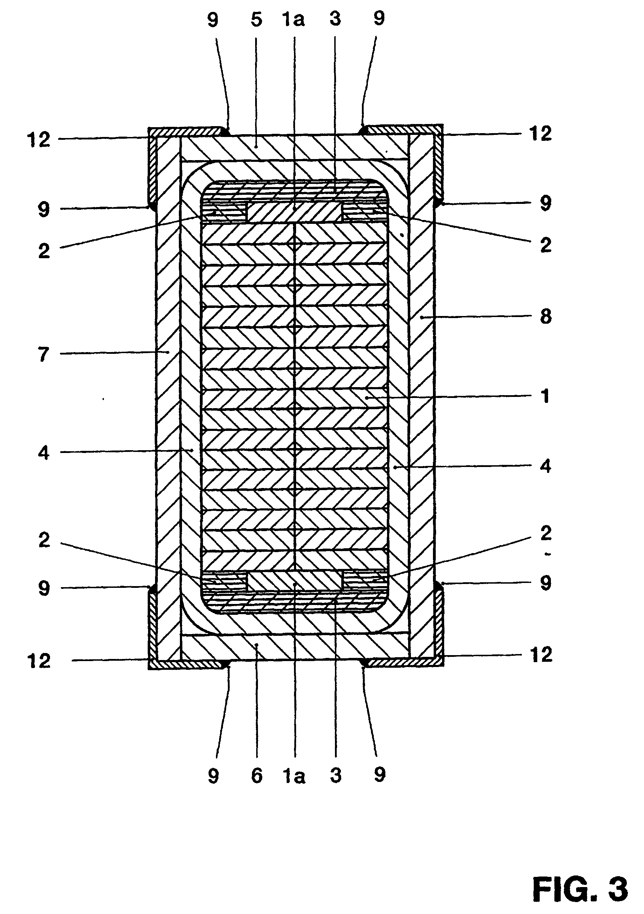

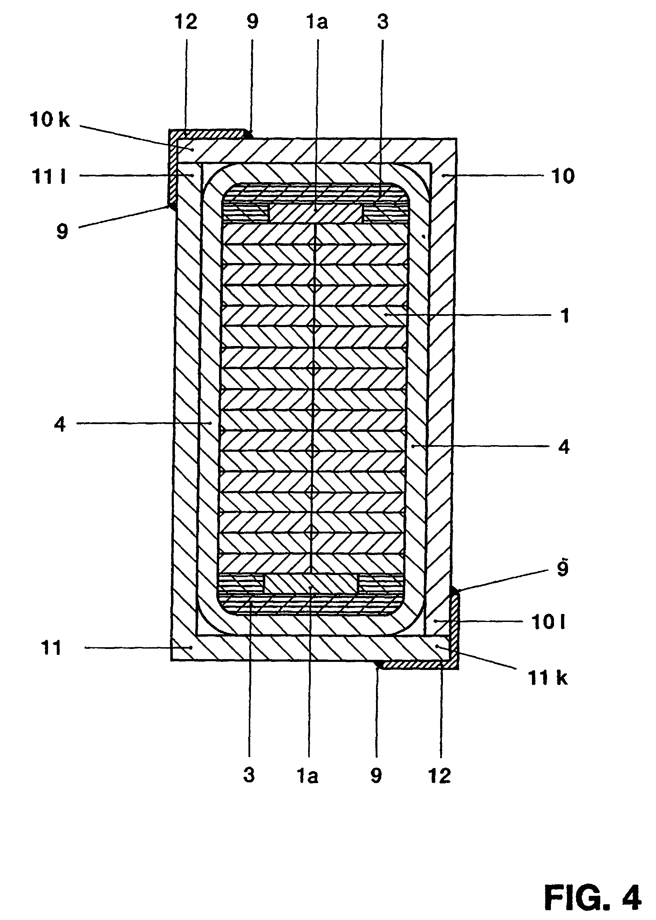

Anstelle die flachen Pressleisten 5 bis 8 bzw. die Pressleisten 10,11 mit L-förmigen Querschnitt "direkt" punktuell miteinander zu verbinden, sieht die Erfindung vor, die Pressleisten 5 bis 8 bzw. 10 und 11 mittels abgewinkelter Laschen 12 punktuell mitander zu verbinden. Dies ist in Fig.3 für eine aus vier flachen Pressleisten und in Fig.4 für eine aus zwei Pressleisten mit L-förmigem Querschnitt bestehende Pressvorrichtung veranschaulicht. Die Verschweissung erfolgt dabei an den Laschenenden, was das Wiederentfernen der Laschen erleichtert. Der Einsatz derartiger Laschen 12 vereinfacht das Schweissen erheblich, weil die Gefahr des Durchbrennens und die daraus resultierende Beschädigung der Hauptisolation eliminiert ist. Zudem lassen sich die Laschen 12 wesentlich einfacher (nach dem Tränken und Aushärten der Isolierung) wieder entfernen. Auch die Vorbereitung der Pressleisten für einen neuen Einsatz gestaltet sich einfacher, weil die Stosstellen nicht nachgearbeitet werden müssen. Durch diese Vorteile wird der durch die Bereitstellung der Laschen 12 hervorgerufene Mehraufwand mehr als wettgemacht.

### BEZEICHNUNGSLISTE

- 1: Teilleiter
- 2: Kittstreifen
- 3: Deckstreifen aus CFK
- 4: Hauptisolation
- 5,6: schmale Pressleisten
- 7,8: breite Pressleisten
- 9: Schweisspunkte
- 10,11: L-förmige Pressleisten
- 12: abgewinkelte Laschen

## Patentansprüche

1. Verfahren zur Herstellung von Leiterstäben für dynamoelektrische Maschinen, bei dem die Leiterstäbe mit einer trocken aufgebrachten Hauptisolierung (4) unter Zwischenschaltung einer Trennfolie in einer Pressvorrichtung angeordnet sind, in dieser auf Mass gepresst und mitsamt der Pressvorrichtung in einem Imprägniergefäss mit Tränkharz imprägniert und ausgehärtet werden, die trocken isolierten Leiterstäbe einzeln in eine der Stabform angepasste und den Leiterstab in seiner gesamten Länge und Umfang umfassenden Pressvorrichtung (5,6,7,8;10,11) eingelegt und in dieser auf Endmass gepresst werden, anschliessend mehrere solchermassen vorbereitete Leiterstäbe samt zugehöriger Pressvorrichtung in das Imprägniergefäss eingebracht und dort mit Tränkharz imprägniert werden, wobei
nach dem Pressen die aus mehreren in Stabumfangsrichtung geteilten Pressleisten (5,6,7,8;10,11) bestehende Pressvorrichtung in Stablängsrichtung gesehen punktuell geschlossen wird und erst nach dem Tränken und Aushärten wieder geöffnet wird und
die einzelnen Pressleisten (5,6,7,8;10,11) an ihren Stossstellen mittels abgewinkelter Laschen (12) punktuell miteinander verbunden, vorzugsweise miteinander verschweisst, werden.

2. Vorrichtung zur Durchführung des Verfahrens nach Anspruch 1, **gekennzeichnet durch** den trocken isolierten Leiterstab umgebende Pressleisten (5,6,7,8;10,11), die punktuell an ihren Längskanten miteinander verbunden, vorzugsweise verschweisst sind.

3. Vorrichtung nach Anspruch 2, **dadurch gekennzeichnet, dass** die Pressleisten (10,11) L-Profil aufweisen, die je mit ihren beiden Schenkeln den Leitstab jeweils auf zwei aneinanderstossenden Seitenflächen umfassen, und an den Stosstellen an den Schenkelenden miteinander verbunden sind.

4. Vorrichtung nach Anspruch 2 oder 3, **dadurch gekennzeichnet**, zur Verbinden der Pressleisten (5,6,7,8;10,11) eine Vielzahl von in Stablängsrichtung verteilte, abgewinkelte Laschen vorgesehen sind, die jeweils an ihren freien Enden mit den Pressleisten (5,6,7,8;10,11) verschweisst sind.

5. Vorrichtung nach einem der Ansprüche 2 bis 4, **dadurch gekennzeichnet, dass** die Pressleisten (5,6,7,8;10,11) in Stablängsrichtung unterteilt sind, wobei zumindest die dem Stirnbügelteil des Leiterstabes zugeordneten Pressleistenteile vom Nutteil getrennt sind.

## Claims

1. Method for producing conductor bars for dynamoelectric machines, in which the conductor bars are arranged with a main insulation (4), applied when dry, in a pressing device with the interposition of a separating film, are pressed to size in the said pressing device and, together with the pressing device, are impregnated with impregnating resin in an impregnating vessel and cured, the dry-insulated conductor bars are inserted individually into a pressing device (5, 6, 7, 8; 10, 11) which is adapted to the bar shape and surrounds the conductor bar over its entire length and circumference and are pressed to the final dimension in the said pressing device, and subsequently a plurality of conductor bars thus prepared are inserted together with the associated pressing device into the impregnating vessel and impregnated there with impregnating resin, in which, after the pressing, the pressing device, consisting of a plurality of pressing strips (5, 6, 7, 8; 10, 11) divided in the circumferential direction of the bar, is closed at points, seen in the longitudinal direction of the bar, and is not reopened until after impregnation and curing, and the individual pressing strips (5, 6, 7, 8; 10, 11) are joined to one another, preferably welded to one another, at points at their joints by means of angular links (12).

2. Device for carrying out the method according to Claim 1, **characterized by** pressing strips (5, 6, 7, 8; 10, 11) which surround the dry-insulated conductor bar and are joined, preferably welded, to one another at points along their longitudinal edges.

3. Device according to Claim 2, **characterized in that** the pressing strips (10, 11) have an L-profile, and each embrace the conductor bar with their two legs respectively on two abutting lateral surfaces, and are joined to one another at the limb ends at the joints.

4. Device according to Claim 2 or 3, **characterized in that** in order to join the pressing strips (5, 6, 7, 8; 10, 11) provision is made of a multiplicity of angular links which are distributed in the longitudinal direction of the bar and which are respectively welded to the pressing strips (5, 6, 7, 8; 10, 11) at their free ends.

5. Device according to one of Claims 2 to 4, **characterized in that** the pressing strips (5, 6, 7, 8; 10, 11) are subdivided in the longitudinal direction of the bar, at least the parts of the pressing strips assigned to the face clip part of the conductor bar being separated from the slot section.

## Revendications

1. Procédé pour la fabrication de barreaux conducteurs pour des machines dynamo-électriques, dans lequel les barreaux conducteurs avec une isolation principale posée à sec (4) sont disposés dans un dispositif de pressage avec interposition d'un film de séparation, sont pressés à leur dimension dans celui-ci et, avec le dispositif de pressage, sont imprégnés avec une résine d'imprégnation dans une cuve d'imprégnation et durcis, les barreaux conducteurs isolés à sec sont posés individuellement dans un dispositif de pressage (5, 6, 7, 8; 10, 11) adapté à la forme du barreau et entourant le barreau conducteur sur toute sa longueur et tout son périmètre et sont pressés dans celui-ci à leurs dimensions finales, ensuite plusieurs barreaux conducteurs préparés de cette façon sont placés avec le dispositif de pressage associé dans la cuve d'imprégnation et y sont imprégnés avec une résine d'imprégnation, dans lequel, après le pressage, le dispositif de pressage composé de plusieurs barres de pressage (5, 6, 7, 8; 10, 11) divisées dans le sens périphérique du barreau est fermé par points, en regardant dans le sens longitudinal du barreau, et n'est à nouveau ouvert qu'après l'imprégnation et le durcissement, et les barres de pressage individuelles (5, 6, 7, 8; 10, 11) sont assemblées par points les unes aux autres, de préférence soudées les unes aux autres, à leurs endroits de jonction au moyen de pattes coudées (12).

2. Dispositif pour la mise en oeuvre du procédé suivant la revendication 1, **caractérisé par** des barres de pressage (5, 6, 7, 8; 10, 11) entourant le barreau conducteur isolé à sec, qui sont assemblées par points les unes aux autres, de préférence soudées, sur leurs arêtes longitudinales.

3. Dispositif suivant la revendication 2, **caractérisé en ce que** les barres de pressage (10, 11) présentent un profil en L, qui entoure avec ses deux ailes le barreau conducteur à chaque fois sur deux faces latérales adjacentes, et sont assemblées les unes aux autres aux endroits de jonction aux extrémités des ailes.

4. Dispositif suivant la revendication 2 ou 3, **caractérisé en ce qu'**il est prévu, pour l'assemblage des barres de pressage (5, 6, 7, 8; 10, 11), une pluralité de pattes coudées réparties dans le sens longitudinal du barreau, qui sont chaque fois soudées par leurs extrémités libres aux barres de pressage (5, 6, 7, 8; 10, 11).

5. Dispositif suivant l'une quelconque des revendications 2 à 4, **caractérisé en ce que** les barres de pressage (5, 6, 7, 8; 10, 11) sont divisées dans le sens longitudinal du barreau, au moins les parties de barres de pressage associées à la partie d'étrier frontal du barreau conducteur étant séparées de la partie des encoches.
